# EUROPEAN PATENT SPECIFICATION

(11) **EP 4 036 069 B1**
(45) Date of publication and mention of the grant of the patent: **13.03.2024**
(21) Application number: 22153845.7
(22) Date of filing: 28.01.2022
(51) Int. Cl.: C03B 3/00, C03B 5/167, C03B 5/235, C03B 5/425, C03B 5/44, C03C 1/00, B09B 3/29, C03B 3/02, C03B 5/00, C03B 5/04

(54) **APPARATUS FOR TREATING WASTE CONTAINING MINERAL WOOL**
ANLAGE ZUR VERARBEITUNG VON ABFALL ENTHALTEND MINERALWOLLE
APPAREIL DE TRAITEMENT DE DECHETS CONTENANT DE LA LAINE MINERALE

(30) Priority: 02.02.2021 IT 202100002246
(43) Date of publication of application: 03.08.2022
(73) Proprietor: Zetadi S.r.l., 21010 Ferno (IT)
(72) Inventor: ZANATTO, Ivano, 28047 Oleggio (NO) (IT); GUALTIERI, Alessandro, 41051 Castelnuovo Rangone (MO) (IT)
(74) Representative: Luppi Intellectual Property S.r.l.

(56) References cited:
- EP-A1- 0 301 951
- US-A- 3 498 779
- US-A1- 2002 169 352
- US-A1- 2017 197 859
- US-A1- 2019 263 701

## Description

The invention relates to an apparatus for inertisation through heat treatment of waste consisting of mineral wool-based insulating materials, such as for example glass wool or rock wool.

In the prior art, apparatuses are known for inertisation through heat treatment and waste consisting of mineral wool-based insulating materials that comprise melting furnaces of conventional type with a basin made of refractory material and melting furnaces with so-called submerged combustion made of steel for high temperatures with water cooling.

US3498779 A teaches water-cooled metal tank surrounded by refractory material. In between the glass melt and the metal tank is a layer of devitrified glass. The furnace comprises a loading zone and it is suitable for melting mineral wool waste. EP0301951 A1 discloses an electric furnace for melting mineral wool waste having water-cooled metal walls, covered by refractory concrete. US2019263701 A1 relates to a submerged combustion melter with cooled walls for glass fiber waste, whereby a refractory coating is forming inside the tank at the contact with the molten glass due to the wall cooling. US2002169352 A1 teaches in an electric glass melter, suitable for glass wool waste, having water-cooled metal walls and inside a solidified glass layer coating. US2017197859 A1 discloses doors and tiltable elements in glass furnaces having slide elements.

Melting furnaces known from the prior art have different drawbacks that adversely affect the applicability thereof to managing mineral wool waste.

First of all, the furnaces always have to be maintained at operating temperature regardless of the operating condition, in order to avoid thermal shock to the refractory materials and in particular to basins containing molten glass, made of electromelted material.

Further, a solid mixture of glass waste, sand and possible metal pigments has to be loaded into the inlet.

Lastly, these types of furnace, still used for treating glass-based but low-density material like glass/rock wool, do not enable internal production waste to be recovered because of the great volatility of the latter, which would be dragged in the fumes.

One object of the invention is to provide an apparatus for inertisation through heat treatment of waste consisting of mineral wool-based insulating materials, such as for example glass wool or rock wool that does not have the drawbacks indicated above.

Another object of the invention is to provide an apparatus that can be run flexibly in function of production needs.

A further object of the invention is to provide an apparatus that enables production waste to be recovered.

A still further object of the invention is to provide an apparatus with optimized energy performance.

The objects of the invention are achieved by an apparatus according to claim 1.

The apparatus according to the invention can be used in "intermittent" mode, according to production needs permitting switch-off for a few periods of time, without the risk of the apparatus being able to suffer damage due to thermal sock.

Further, the apparatus according to the invention enables production waste to be recovered and energy consumption to be optimized, with consequent greater control of NOx and of carbon dioxide emissions.

Further advantages and features of the invention will be clear from the description that follows of some embodiments of the invention, with reference to the attached drawings, in which:
figure 1 is a schematic raised view of a first embodiment of an apparatus according to the invention;
figure 2 is a schematic raised view of a second embodiment of an apparatus according to the invention;
figure 3 is a schematic raised view of a third embodiment of an apparatus according to the invention;
figure 4 is a cross section of the apparatus of figure 1 along the line A-A or a cross section of the apparatus of figure 2, along the line B-B, or a cross section along the line C-C of the apparatus of figure 3, the three sections being substantially identical;
figure 5 is a perspective view of an access door to the apparatus according to the invention, in closed position;
figure 6 is a perspective view of the access door of figure 5, in open position;
figure 7 is a perspective view of a fixed part of the door of figures 4 and 5;
figure 8 is a perspective view of a movable part of the door of figures 4 and 5;
figure 9 is a schematic frontal view of a further access door to the apparatus, in the embodiment of figure 3;
figure 10 is a view from the left of the further door of figure 9;
figure 11 is a schematic longitudinal section of the unloading zone of the apparatus of figure 3 with the further door in closed position;
figure 12 is a section like that of figure 11, with the further door in open position.

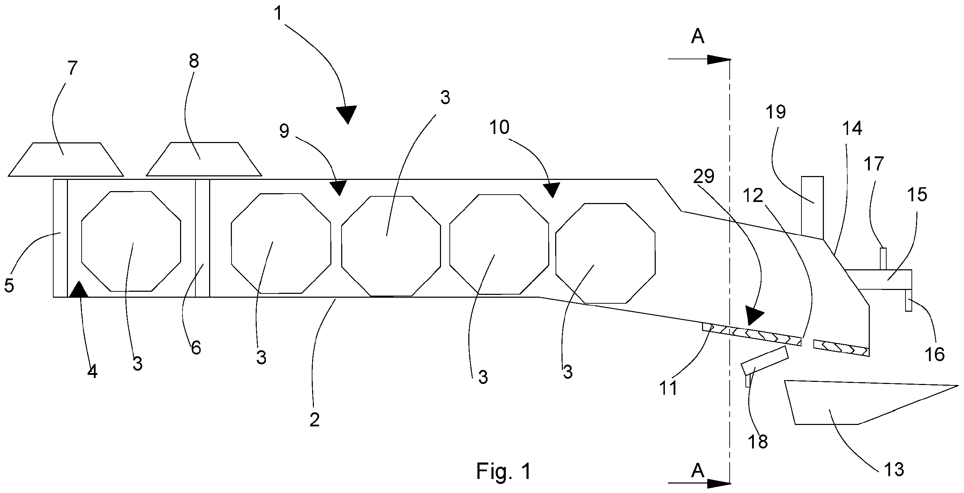

In figure 1 a first embodiment is illustrated of an apparatus 1 according to the invention that comprises a loading zone 4 through which the materials to be treated is introduced into a melting furnace 2 (more briefly below as "furnace 2"), the materials to be treated being in the form of balls 3 of compressed materials, wrapped in a film of plastics in order to prevent dispersal of said materials both in the environment outside the furnace and inside the furnace.

The loading zone 4 is provided with a first door 5, which separates the loading zone 4 from the environment outside the furnace, and a second door 6 that separates the loading zone 4 from the inside of the furnace.

At the first door 5, a first extractor hood 7 is arranged and at the second door 6 a second extractor hood 8 is arranged. The first extractor hood 7 and the second extractor hood 8 are used to prevent high temperature air and fumes being able to exit into the environment outside the furnace 2 during the operation of introducing a ball 3 of material to be treated inside the furnace.

Introducing a ball 3 of material to be treated inside the furnace 2 occurs in two steps: in a first step, the first door 5 is opened, maintaining closed the second door 6 and a ball 3 is introduced into the loading zone 4. In a second step, the first door 5 is closed, the second door 6 is open and the ball 3 is pushed by a pushing device (not shown) inside the furnace 2, advancing other balls 3 previously inserted inside the furnace.

Inside the furnace 2, downstream of the second door 6, a pre-heating zone 9 in which the material to be treated packaged in the balls 3 is progressively heated, until reaching melting temperature, and a melting zone 10, placed downstream of the pre-heating zone 9, in which the material of the balls 3, after reaching melting temperature, starts to melt, are identifiable.

The pre-heating zone 9 and the melting zone 10 are arranged aligned on one another with a substantially horizontal axis.

The balls 3 are advanced in the pre-heating zone 9 and in the melting zone 10 through the effect of the thrust exerted on the balls 3 present inside the furnace by further balls 3 that are introduced in sequence inside the furnace.

The melted material, in liquid state, collects in a melting basin 11, placed downstream of the melting zone 10.

The melting basin 11 is provided with a discharge opening 12 through which the melted material is directed to a collecting tank 13.

The bottom 29 of the melting basin 11 is tilted downwards in the direction of the discharge opening 12, to promote discharging of the melted material.

At an end 14 of the furnace 2, opposite the loading zone 4, at least one burner 15, advantageously a plurality of burners 15 is arranged, that provides/provide thermal energy for heating and melting the balls material introduced into the furnace 2.

The at least one burner 15 is supplied with fuel, through a first supply conduit 16, and with oxygen as a comburent, through a second supply conduit 17. The use of oxygen as a comburent, instead of the air normally used in the burners, is advantageous for enabling temperatures above 1000 °C to be reached inside the furnace that are able to ensure suitable fluidity of the melted material, to enable the melted material to be discharged through the opening 12 of the melting basin 11, and energy consumption to be optimized.

It is also possible to supply the at least one burner 15 with a comburent consisting of a mixture of air and oxygen.

A further burner 18 is arranged below the melting basin 11, outside the furnace 2, and is oriented so as to supply heat to the discharge opening 12, to prevent the melted material possibly starting to cool, closing totally or partially the discharge opening 12.

The end 14 is further provided with a discharge conduit 19 for discharging fumes produced during heating and melting of the material of the balls 3. The discharge conduit 19 communicates with post-combustion device, operating, for example, at a minimum temperature of 850 °C, in which the combustion of carbon oxide and volatile organic compounds present in said fumes takes place: the volatile organic compounds are the result of the combustion of the film that wraps the balls 3 and of spurious materials, such as binders and other both organic and inorganic components in the waste to be treated.

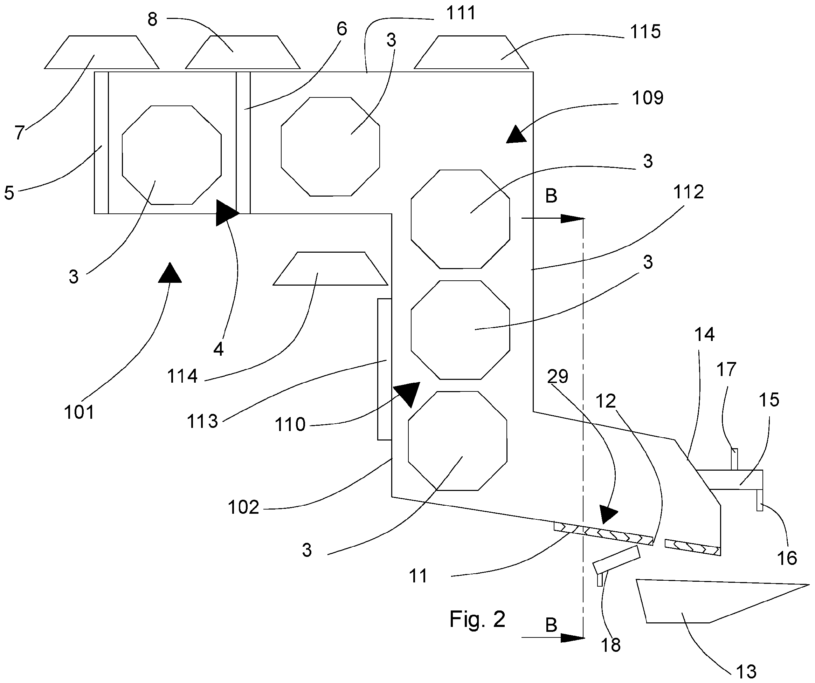

In figure 2, a second embodiment is illustrated of an apparatus 101 according to the invention that comprises a loading zone 4 through which the materials to be treated in the form of balls 3 of compressed materials, wrapped in film of plastics are introduced into a melting furnace 102 (known hereinafter more concisely as "furnace 102"), in order to avoid dispersal of said materials in the environment outside the furnace.

The parts of the furnace 102 identical to parts of the furnace 2 are marked by the same reference numbers used for the corresponding parts of the furnace 2.

The loading zone 4 is provided with a first door 5, that separates the loading zone 4 from the environment outside the furnace, and a second door 6 that separates the loading zone 4 from the inside of the furnace.

At the first door 5, a first extractor hood 7 is arranged and at the second door 6 a second extractor hood 8 is arranged.

The first extractor hood 7 and the second extractor hood 8 are used to prevent high temperature air and fumes exiting into the environment outside the furnace 102 during the operation of introducing a ball 3 of material to be treated inside the furnace.

Introducing a ball 3 of material to be treated inside the furnace 102 occurs in two steps: in a first step the first door 5 is opened, maintaining closed the second door 6 and a ball 3 is introduced into the loading zone 4. In a second step, the first door 5 is closed, the second door 6 is open and the ball 3 is pushed by a pushing device (not shown) inside the melting furnace 102, advancing other balls 3 previously inserted inside the furnace.

Inside the furnace 102, downstream of the second door 6, a pre-heating zone 109, in which the material to be treated packaged in the balls 3 is progressively heated, until reaching melting temperature, and a melting zone 110, downstream of the pre-heating zone 109 in which the material of the balls 3, after reaching melting temperature, starts to melt, are identifiable.

The furnace 102 comprises a first portion 111 with a substantially horizontal axis in which a first part of the pre-heating zone 109 is comprised. The first portion 111 is followed by a second portion 112 with a substantially vertical axis in which a second part of the pre-heating zone 109 and the melting zone 110 are comprised.

The second portion 112 is provided with a third door 113 associated with a third extractor hood 114.

When the furnace 102 is loaded for the first time, balls 3 are introduced into the second portion 112, through the third door 113, until the second portion 112 is filled. The subsequent balls 3 are introduced in sequence into the furnace 102 through the first door 5, the loading zone 4 and the second door 6, as disclosed above.

The balls 3 are advanced to the first portion 111 through the effect of the thrust exerted on the balls 3 present inside the furnace 102 by further balls 3 that are introduced inside the furnace 102, whereas in the second portion 112 advancement is by gravity.

The melted material, in liquid state, collects in a melting basin 11, placed downstream of the melting zone 110.

The melting basin 11 is provided with a discharge opening 12 through which the melted material is directed to a collecting tank 13.

The bottom of the melting basin 11 is tilted downwards in the direction of the discharge opening 12, to promote discharging of the melted material.

At an end 14 of the furnace 102, opposite the loading zone 4, at least one burner 15, advantageously a plurality of burners 15, is arranged, that provides/provide thermal energy for heating and melting the balls material introduced into the furnace 102.

The at least one burner 15 is supplied with fuel through a first supply conduit 16 and with oxygen as a comburent, through a second supply conduit 17. The use of oxygen as a comburent, instead of the air normally used in the burners, is advantageous for enabling temperatures above 1000 °C to be reached inside the furnace 2 that are suitable for ensuring suitable fluidity of the melted material, to enable the melted material to be discharged through the opening 12 of the melting basin 11, and energy consumption to be optimized.

It is also possible to supply the at least one burner 15 with a comburent consisting of a mixture of air and oxygen.

A further burner 18 is arranged below the melting basin 11, outside the furnace 102, and is oriented so as to supply heat to the discharge opening 12, to prevent the melted material possibly starting to cool, closing totally or partially the discharge opening 12.

The fumes produced during the heating and melting of the material of the balls 3 are extracted from the furnace 102 by a fourth extractor hood 115 placed at the top of the second portion 112. The fumes extracted from the fourth extractor hood 115 are sent to a post-combustion device operating, for example, at a minimum temperature of 850 °C in which the combustion of carbon oxide and volatile organic compounds present in said fumes takes place: the volatile organic compounds are the result of the combustion of the film that wraps the balls 3 and of spurious materials, such as binders and other both organic and inorganic components in the waste to be treated.

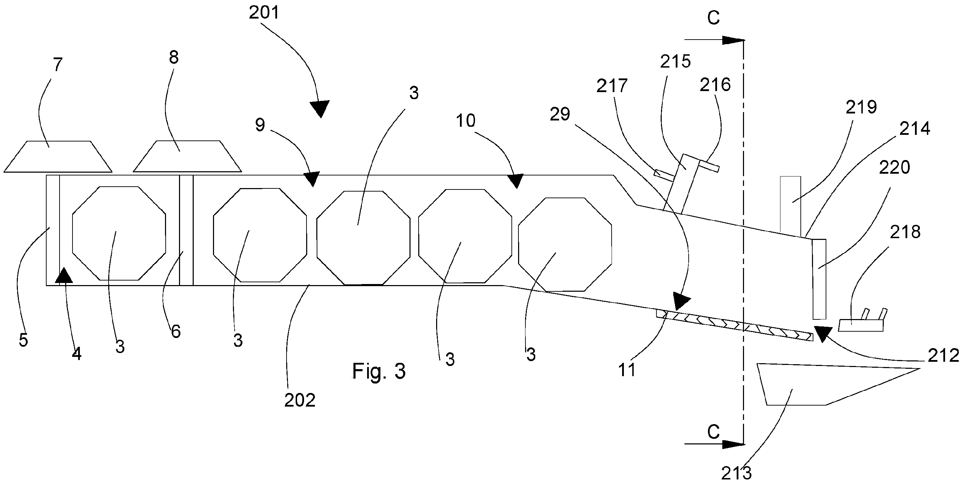

In figure 3, a third embodiment is illustrated of an apparatus 201 according to the invention that comprises a loading zone 4 through which the materials to be treated, in the form of balls 3 of compressed materials, wrapped in a film of plastics in order to prevent dispersal of said materials both outside the furnace and inside the furnace, are introduced into a melting furnace 202 (hereinafter more concisely "furnace 202").

The parts of the furnace 202 that are identical to parts of the furnace 2 are marked by the same reference numbers used for the corresponding parts of the furnace 2.

The loading zone 4 is provided with a first door 5, that separates the loading zone 4 from the environment outside the furnace, and a second door 6 that separates the loading zone 4 from the inside of the furnace.

At the first door 5, a first extractor hood 7 is arranged and at the second door 6 a second extractor hood 8 is arranged.

The first extractor hood 7 and the second extractor hood 8 are used to prevent high temperature air and fumes escaping into the environment outside the furnace 202 during the operation of introducing a ball 3 of material to be treated inside the furnace.

A ball 3 of material to be treated is introduced inside the furnace 202 in two steps: in a first step the first door 5 is opened, maintaining closed the second door 6 and a ball 3 is introduced into the loading zone 4. In a second step, the first door 5 is closed, the second door 6 is open and the ball 3 is pushed by a pushing device (not shown) inside the furnace 202, advancing other balls 3 previously inserted inside the furnace.

Inside the furnace 202, downstream of the second door 6, a pre-heating zone 9, in which the material to be treated packaged in the balls 3 is progressively heated, until reaching melting temperature, and a melting zone 10, located downstream of the pre-heating zone 9, in which the material of the balls 3, after reaching melting temperature, starts to melt, are identifiable.

The pre-heating zone 9 and the melting zone 10 are arranged aligned on one another with a substantially horizontal axis.

The balls 3 in the pre-heating zone 9 and in the melting zone 10 are advanced through the effect of the thrust exerted on the balls 3 present inside the furnace by further balls 3 that are introduced in sequence inside the furnace.

The melted material, in liquid state, collects in a melting basin 11, placed downstream of the melting zone 10.

The melting basin 11 is provided with a discharge opening 212 through which the melted material is directed to a collecting tank 213.

The discharge opening 212 is placed at an end 214 of the furnace 202, opposite the loading zone 4.

The bottom 29 of the melting basin 11 is tilted downwards in the direction of the discharge opening 212, to promote discharging of the melted material.

On an upper part of the melting basin 11, opposite the bottom 29, at least one burner 215 is arranged, advantageously a plurality of burners 215, that provides/provide thermal energy for heating and melting the material in balls introduced into the furnace 202.

The at least one burner 215 is supplied with fuel, through a first supply conduit 216, and with oxygen as a comburent, through a second supply conduit 217. Using oxygen as a comburent, instead of air, which is normally used in the burners, is advantageous to enable temperatures to be obtained inside the furnace 202 that are above 1000 °C and are suitable for ensuring suitable fluidity of the melted material, to be able to discharge the melted material through the opening 212 of the melting basin 11, and to optimise energy consumption.

It is also possible to supply the at least one burner 215 with a comburent consisting of a mixture of air and oxygen.

A further burner 218 is arranged opposite the discharge opening 212, outside the furnace 202, and is oriented so as to supply heat to the discharge opening 212, to prevent the melted material being able to start cooling, totally or partially closing the discharge opening 212.

The end 214 is further provided with a discharge conduit 219 for discharging the fumes produced during heating and melting of the material of the balls 3. The discharge conduit 219 communicates with post-combustion device, operating, for example, at a minimum temperature of 850 °C, in which the combustion of carbon oxide and volatile organic compounds present in said fumes takes place: the volatile organic compounds are the result of the combustion of the film that envelops the balls 3 and of spurious materials, like binders and other both organic and inorganic components that are present in the waste to be treated.

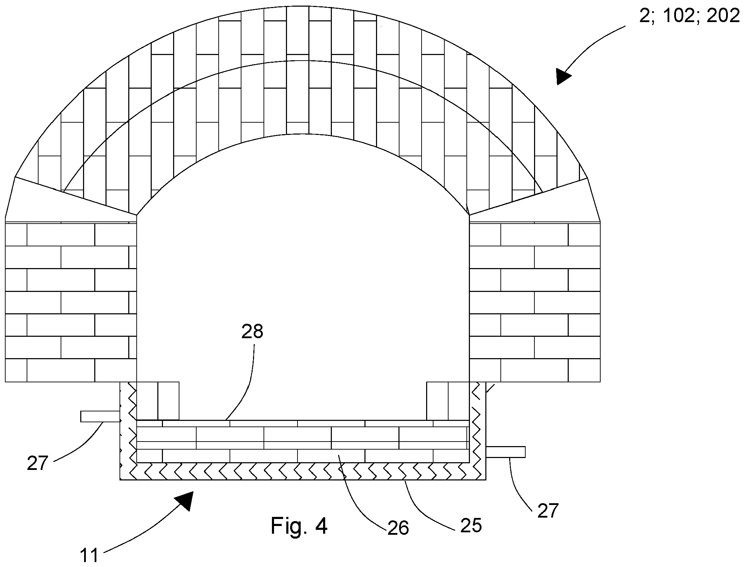

Figure 4 illustrates a cross section of the furnace 2, along the line A-A in figure 1, or a cross section of the furnace 102 along the line B-B of figure 2, or a cross section of the furnace 202 along the line C-C of figure 3. The three sections are substantially identical.

In figure 4 the melting basin 11 is visible, which is made of plates 25 of metal material that resists high temperatures, in particular at the temperature of the melted material, for example comprised between 1000 °C and 1350 °C, and is coated internally by a layer 26 of refractory material. The melting basin is provided with a water-cooled cooling circuit 27, which is advantageous, in particular if the furnace 2, 102, 202 is intended for intermittent use.

The water-cooled cooling circuit 27 causes cooling of the inner surface 28 of the melting basin 11, causing the formation of a solidified layer of melted material on said inner surface 28.

The solidified layer constitutes a further "refractory" coating that protects the plates 25 from thermal shock and acts as a partial barrier to heat exchange. In this manner energy dissipation by cooling water is minimized and it is possible to minimize the quantity of water used to cool the melting basin 11, with consequent reduced energy consumption of the cooling system.

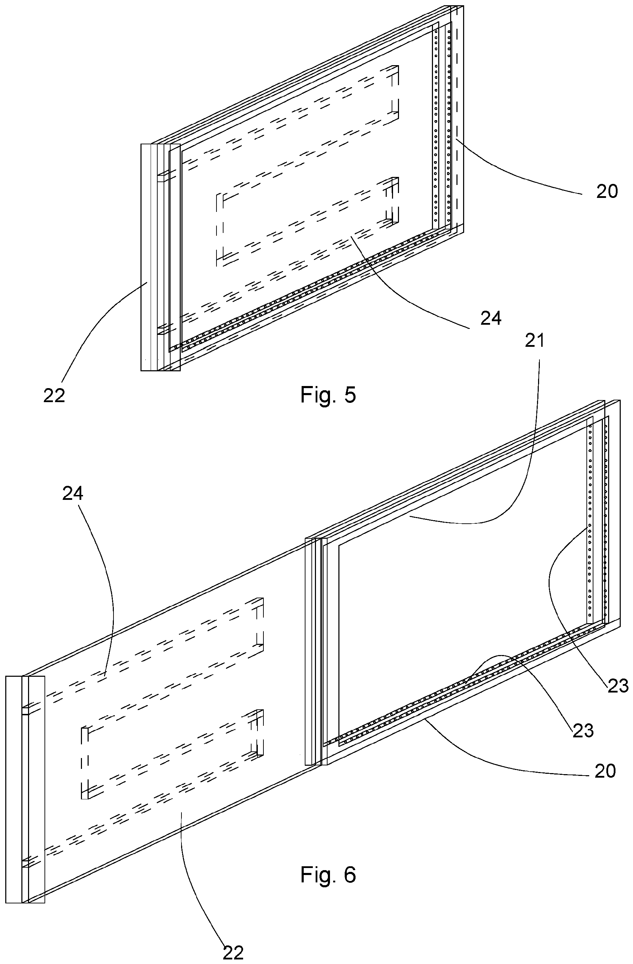

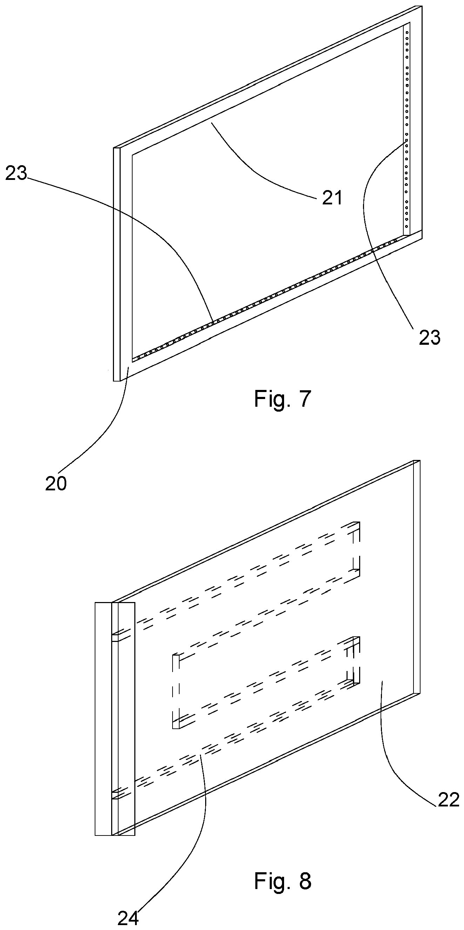

In figures 5 to 8, the structure of doors 5, 6, 113 is illustrated that are substantially identical to one another.

Each door comprises a fixed frame 20, that surrounds an opening 21 and a movable panel 22 that is slidable on the fixed frame, between a closed position, visible in figure 4, in which the movable panel 22 closes the opening 21, and an open position, visible in figure 5, in which the movable panel 22 leaves the opening 21 free, enabling the inside of the apparatus 1; 101; 201 to be accessed.

The fixed frame 20 is provided with a plurality of nozzles 23, distributed on at least two sides of the fixed frame 20 and facing the opening 21.

The nozzles 23, supplied with a flow of pressurized air, create an air barrier on the opening 21 that counteracts the escape of air and fumes to the environment outside the apparatus 1; 101; 201.

The movable panel 22 is provided with a cooling circuit 24 in which a cooling fluid, mainly water, is circulated, to maintain the temperature of the movable panel 22 below a set safety value.

In order to prevent, or at least minimize, the escape of high temperature fumes and air from the furnace 2; 102; 202, an interior of the furnace 2; 102; 202 pressure below the pressure in the environment outside the furnace 2; 102; 202 is maintained.

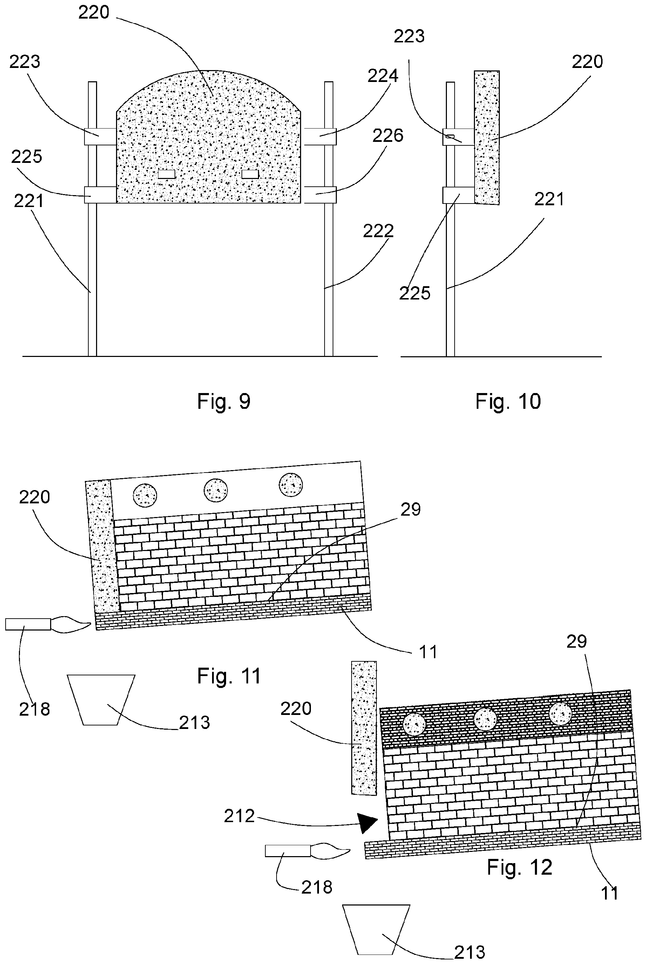

Figures 9 and 10 illustrate a further door 220 placed at the end 214 of the furnace 202. The further door 220 is provided with a first pair of slide elements 223, 225 that can slide along a first guide rod 221 and with a second pair of slide elements 224, 226 that can slide along a second guide rod 222, parallel to the first guide rod 221. The first guide rod 221 and the second guide rod 222 are arranged on sides opposite the further door 220.

The further door 220, sliding along the guide rods 221 and 222, can move from a first position, illustrated in figure 11, in which it closes the discharge opening 212, to a second position, illustrated in figure 12, in which it leaves the discharge opening 212 open, to discharge the melted products into the collecting tank 213 and to permit access thereto, for example to remove deposits of melted material, which solidifies before being discharged from the discharge opening 212 into the collecting tank 213.

In the open position, the further door 212 is parallel to the guide rods 221 and 222, whereas in the closed position it is tilted with respect to said rods for adapting to the conformation of the surface of the end 214 of the furnace 202.

The slide elements 223, 224, 225 and 226 are associated with hinges and tilting devices (which are not visible in the figures) and to permit tilting of the further door 220 with respect to the guide rods 221 and 222.

## Claims

1. Apparatus (1; 101; 201) for inertisation through heat treatment of waste consisting of mineral wool-based insulating materials, comprising a loading zone (4), through which said waste is loaded into a melting furnace (2; 102; 202), wherein said melting furnace (2; 102; 202) comprises a pre-heating zone (9; 109), in which said waste is heated until it reaches a melting temperature, a melting zone (10; 110) in which said waste is melted, and a melting basin (11) in which a melting material from said waste collects to be discharged into a collecting tank (13) outside the melting furnace (2; 102), wherein said melting basin (11) is made of plates (25) of metal material that resists high temperatures, in particular said melting temperature, is provided with a coating of refractory material (26) and with a cooling circuit (27), **characterized in that** said loading zone (4) is provided with a first door (5) suitable for isolating said loading zone (4) from an environment outside the apparatus (1; 101; 201), or to place said loading zone (4) in communication with said outer environment, to enable said waste to be introduced therein, wherein said loading zone (4) is provided with a second door (6) suitable for isolating said loading zone (4) from the melting furnace (2; 102; 202), or to place said loading zone (4) in communication with the pre-heating zone (9; 109) of the melting furnace (2; 102; 202) wherein at said first door a first extractor hood (7) is arranged and at said second door a second extractor hood (8) is arranged.

2. Apparatus (1; 101; 201) according to claim 1, wherein said melting basin (11) is provided with a discharge opening (12; 212) through which said melting material can be discharged from the melting basin (11) and sent to a collecting tank (13) and wherein a bottom (29) of the melting basin (11) is tilted downwards in the direction of said discharge opening (12).

3. Apparatus (1; 101) according to claim 1, or 2, wherein at an end (14) of the melting furnace (2; 102), opposite the loading zone (4), at least one burner (15) is arranged supplied with fuel through a first supply conduit (16) and with oxygen, or with a mixture of air and oxygen, as a comburent, through a second supply conduit (17).

4. Apparatus (1; 101) according to claim 2, or 3, wherein a further burner (18) is arranged below the melting basin (11), outside the furnace (2; 102), and is oriented so as to supply heat to the discharge opening (12).

5. Apparatus (201), according to claim 2, wherein said discharge opening (212) is placed at an end (214) of the furnace (202), opposite the loading zone (4).

6. Apparatus (201) according to claim 2, or 5, wherein on an upper part of the melting basin (11), opposite the bottom (29), at least one burner (215) is arranged that is supplied with fuel through a first supply conduit (216) and with oxygen, or with a mixture of air and oxygen, as a comburent, through a second supply conduit (217) and/or wherein a further burner (218) is arranged opposite the discharge opening (212), outside the furnace (202); and is oriented so as to supply heat to the discharge opening (212).

7. Apparatus (1; 201) according to one of the preceding claims, wherein the pre-heating zone (9) and the melting zone (10) of the melting furnace (2; 202) are arranged aligned on one another with a substantially horizontal axis.

8. Apparatus (1) according to one of the preceding claims, wherein said end (14; 214) is further provided with a discharge conduit (19; 219) for discharging the fumes produced during heating and melting of said waste, wherein said discharge conduit (19; 219) communicates with a post-combustion device in which the combustion of carbon oxide and volatile organic compounds present in said fumes occurs.

9. Apparatus (101) according to one of claims 1 to 4, wherein the melting furnace (102) comprises a first portion (111) with a substantially horizontal axis in which a first part of the pre-heating zone (109) is comprised, wherein the first portion (111) is followed by a second portion (112) with a substantially vertical axis in which a second part of the pre-heating zone (109) and the melting zone (110) are comprised and wherein said second portion (112) is provided with a third door (113) associated with a third extractor hood (114).

10. Apparatus (101) according to claim 9, wherein at the top of the second portion (112) a fourth extractor hood (115) is placed that sucks from the inside of the furnace (102) fumes produced during heating and melting of said waste and sends the fumes to a post-combustion device in which the combustion of carbon oxide and volatile organic compounds present in said fumes takes place.

11. Apparatus (1; 101; 201) according to claim 9, or 10, wherein each of said first door (5), second door (6) and third door (113) comprises a fixed frame (20), that surrounds an opening (21), and a movable panel (22) that is slidable on the fixed frame (20) between a closed position, in which the movable panel (22) closes the opening (21), and an open position, in which the movable panel (22) leaves the opening (21) free.

12. Apparatus (1; 101; 201) according to claim 11, wherein the fixed frame (20) is provided with a plurality of nozzles (23), distributed on at least two sides of the fixed frame (20) and facing the opening (21), wherein the nozzles (23) are supplied with a flow of pressurized air to create an air barrier on the opening (21) and/or wherein the movable panel (22) is provided with a cooling circuit (24) in which a cooling fluid is circulated.

13. Apparatus (201) according to one of claims 5 to 7, wherein a further door (220) is arranged at the end (214) of the furnace (202), said door being movable between a first position in which it closes the discharge opening (212) and a second position in which the discharge opening (212) is left free.

14. Apparatus (201) according to claim 13, wherein the further door (220) is provided with a first pair of slide elements (223, 225) that can slide along a first guide rod (221) and with a second pair of slide elements (224, 226) that can slide along a second guide rod (222), parallel to the first guide rod (221), the first guide rod (221) and the second guide rod (222) being arranged on sides opposite the further door (220) and in which said further door (220) is tiltable with respect to said first guide rod (221) and second guide rod (222).

## Patentansprüche

1. Vorrichtung (1; 101; 201) zur Inertisierung durch Wärmebehandlung von Abfall, der aus Dämmstoffen auf Mineralwollbasis besteht, mit einer Beladungszone (4), durch die der Abfall in einen Schmelzofen (2; 102; 202) geladen wird, wobei der Schmelzofen (2; 102; 202) eine Vorwärmzone (9; 109), in der der Abfall erwärmt wird, bis er eine Schmelztemperatur erreicht, eine Schmelzzone (10; 110), in der der Abfall geschmolzen wird, und ein Schmelzbecken (11) aufweist, in dem sich ein Schmelzmaterial aus dem Abfall sammelt, um in einen Sammeltank (13) außerhalb des Schmelzofens (2; 102) angeführt zu werden, wobei das Schmelzbecken (11) aus Platten (25) aus Metallmaterial gefertigt ist, das hohen Temperaturen, insbesondere der Schmelztemperatur, standhält, und mit einer Beschichtung aus hitzebeständigem Material (26) und mit einem Kühlkreislauf (27) versehen ist, **dadurch gekennzeichnet, dass** die Beladungszone (4) mit einer ersten Tür (5) versehen ist, die zum Isolieren der Beladungszone (4) von einer Umgebung außerhalb der Vorrichtung (1; 101; 201) geeignet ist, oder um die Beladungszone (4) in Kommunikation mit der äußeren Umgebung zu bringen, damit der Abfall darin eingeführt werden kann, wobei die Beladungszone (4) mit einer zweiten Tür (6) versehen ist, die zum Isolieren der Beladungszone (4) von dem Schmelzofen (2; 102; 202) geeignet ist, oder um die Beladungszone (4) in Kommunikation mit der Vorwärmzone (9; 109) des Schmelzofens (2; 102; 202) zu bringen, wobei an der ersten Tür eine erste Abzugshaube (7) angeordnet ist, und an der zweiten Tür eine zweite Abzugshaube (8) angeordnet ist.

2. Vorrichtung (1; 101; 201) nach Anspruch 1, wobei das Schmelzbecken (11) mit einer Abführöffnung (12; 212) versehen ist, durch die das Schmelzmaterial aus dem Schmelzbecken (11) abgeführt und zu einem Sammeltank (13) verbracht werden kann, und wobei ein Boden (29) des Schmelzbeckens (11) in Richtung der Abführöffnung (12) nach unten geneigt ist.

3. Vorrichtung (1; 101) nach Anspruch 1 oder 2, wobei an einem Ende (14) des Schmelzofens (2; 102), das der Beladungszone (4) entgegengesetzt ist, zumindest ein Brenner (15) angeordnet ist, der mit Kraftstoff durch eine erste Versorgungsleitung (16) und mit Sauerstoff oder mit einem Gemisch aus Luft und Sauerstoff, als Brennstoff, durch eine zweite Versorgungsleitung (17) versorgt wird.

4. Vorrichtung (1; 101) nach Anspruch 2 oder 3, wobei ein weiterer Brenner (18) unter dem Schmelzbecken (11) außerhalb des Ofens (2; 102) angeordnet und orientiert ist, um die Abführöffnung (12) mit Wärme zu versorgen.

5. Vorrichtung (201) nach Anspruch 2, wobei die Abführöffnung (212) an einem Ende (214) des Ofens (202), das der Beladungszone (4) entgegengesetzt ist, platziert ist.

6. Vorrichtung (201) nach Anspruch 2 oder 5, wobei auf einem oberen Teil des Schmelzbeckens (11), der dem Boden (29) entgegengesetzt ist, zumindest ein Brenner (215) angeordnet ist, der mit Kraftstoff durch eine erste Versorgungsleitung (216) und mit Sauerstoff oder mit einem Gemisch aus Luft und Sauerstoff, als Brennstoff, durch eine zweite Versorgungsleitung (217) versorgt wird, und/oder wobei ein weiterer Brenner (218) der Abführöffnung (212) entgegengesetzt außerhalb des Ofens (202) angeordnet ist, und orientiert ist, um die Abführöffnung (212) mit Wärme zu versorgen.

7. Vorrichtung (1; 201) nach einem der vorhergehenden Ansprüche, wobei die Vorwärmzone (9) und die Schmelzzone (10) des Schmelzofens (2; 202) mit im Wesentlichen horizontaler Achse aufeinander ausgerichtet angeordnet sind.

8. Vorrichtung (1) nach einem der vorhergehenden Ansprüche, wobei das Ende (14; 214) weiterhin mit einer Abführleitung (19; 219) zum Abführen der Rauchgase versehen ist, die während des Erwärmens und Schmelzens des Abfalls erzeugt werden, wobei die Abführleitung (19; 219) mit einer Nachbrennungsvorrichtung kommuniziert, in der die Verbrennung von Kohlenstoffoxid und flüchtigen organischen Verbindungen, die in den Rauchgasen enthalten sind, erfolgt.

9. Vorrichtung (101) nach einem der Ansprüche 1 bis 4, wobei der Schmelzofen (102) einen ersten Abschnitt (111) mit einer im Wesentlichen horizontalen Achse aufweist, in dem ein erster Teil der Vorwärmzone (109) enthalten ist, wobei der erste Abschnitt (111) von einem zweiten Abschnitt (112) mit einer im Wesentlichen vertikalen Achse gefolgt ist, in dem ein zweiter Teil der Vorwärmzone (109) und die Schmelzzone (110) enthalten sind, und wobei der zweite Abschnitt (112) mit einer dritten Tür (113) versehen ist, der eine dritte Abzugshaube (114) zugeordnet ist.

10. Vorrichtung (101) nach Anspruch 9, wobei an der Oberseite des zweiten Abschnitts (112) eine vierte Abzugshaube (115) platziert ist, die Rauchgase von der Innenseite des Ofens (102) absaugt, die während des Erwärmens und Schmelzens des Abfalls erzeugt werden, und die Rauchgase zu einer Nachverbrennungsvorrichtung schickt, in der die Verbrennung von Kohlenstoffoxid und flüchtigen organischen Verbindungen, die in den Rauchgasen enthalten sind, stattfindet.

11. Vorrichtung (1; 101; 201) nach Anspruch 9 oder 10, wobei jede von der ersten Tür (5), der zweiten Tür (6) und der dritten Tür (113) einen festen Rahmen (20), der eine Öffnung (21) umgibt, und ein bewegliches Paneel (22) aufweist, das an dem festen Rahmen (20) zwischen einer geschlossenen Position, in der das bewegliche Paneel (22) die Öffnung (21) schließt, und einer offenen Position, in der das bewegliche Paneel (22) die Öffnung (21) freilässt, verschiebbar ist.

12. Vorrichtung (1; 101; 201) nach Anspruch 11, wobei der feste Rahmen (20) mit einer Mehrzahl von Düsen (23) versehen ist, die an zumindest zwei Seiten des festen Rahmens (20) verteilt und der Öffnung (21) zugewandt sind, wobei die Düsen (23) mit einem Strom von Druckluft versorgt werden, um eine Luftbarriere an der Öffnung (21) zu erzeugen, und/oder wobei das bewegliche Paneel (22) mit einem Kühlkreislauf (24) versehen ist, in dem ein Kühlfluid zirkuliert wird.

13. Vorrichtung (201) nach einem der Ansprüche 5 bis 7, wobei eine weitere Tür (220) an dem Ende (214) des Ofens (202) angeordnet ist, wobei die Tür zwischen einer ersten Position, in der sie die Abführöffnung (212) verschließt und einer zweiten Position, in der die Abführöffnung (212) freigelassen ist, beweglich ist.

14. Vorrichtung (201) nach Anspruch 13, wobei die weitere Tür (220) mit einem Paar Schiebeelementen (223, 225), die sich entlang einer ersten Führungsstange (221) verschieben können, und mit einem zweiten Paar Schiebeelementen (224, 226) versehen ist, die sich entlang einer zweiten Führungsstange (222) verschieben können, die parallel zu der ersten Führungsstange (221) verläuft, wobei die erste Führungsstange (221) und die zweite Führungsstange (222) an Seiten angeordnet sind, die der weiteren Tür (220) entgegengesetzt sind, und wobei die weitere Tür (220) bezüglich der ersten Führungsstange (221) und der zweiten Führungsstange (222) neigbar ist.

## Revendications

1. Appareil (1 ; 101 ; 201) d'inertisation par traitement thermique de déchets constitués de matériaux isolants à base de laine minérale, comprenant une zone de chargement (4), par le biais de laquelle lesdits déchets sont chargés dans un four de fusion (2 ; 102 ; 202), dans lequel ledit four de fusion (2 ; 102 ; 202) comprend une zone de préchauffage (9 ; 109), dans laquelle lesdits déchets sont chauffés jusqu'à ce qu'ils atteignent une température de fusion, une zone de fusion (10 ; 110) dans laquelle lesdits déchets sont fondus et un bassin de fusion (11) dans lequel un matériau de fusion issu desdits déchets est collecté pour être déchargé dans un réservoir collecteur (13) à l'extérieur du four de fusion (2 ; 102), dans lequel ledit bassin de fusion (11) est constitué de plaques (25) d'un matériau métallique qui résiste à des températures élevées, en particulier à ladite température de fusion, est doté d'un revêtement de matériau réfractaire (26) et d'un circuit de refroidissement (27), **caractérisé en ce que** ladite zone de chargement (4) est dotée d'une première porte (5) appropriée pour isoler ladite zone de chargement (4) d'un environnement à l'extérieur de l'appareil (1 ; 101 ; 201), ou pour placer ladite zone de chargement (4) en communication avec ledit environnement extérieur, pour permettre auxdits déchets d'y être introduits, dans lequel ladite zone de chargement (4) est dotée d'une deuxième porte (6) appropriée pour isoler ladite zone de chargement (4) du four de fusion (2 ; 102 ; 202), ou pour placer ladite zone de chargement (4) en communication avec la zone de préchauffage (9 ; 109) du four de fusion (2 ; 102 ; 202) dans lequel à ladite première porte est agencée une première hotte aspirante (7) et à ladite deuxième porte est agencée une deuxième hotte aspirante (8).

2. Appareil (1; 101; 201) selon la revendication 1, dans lequel ledit bassin de fusion (11) est doté d'une ouverture de décharge (12 ; 212) à travers laquelle ledit matériau de fusion peut être déchargé à partir du bassin de fusion (11) et envoyé vers un réservoir collecteur (13) et dans lequel un fond (29) du bassin de fusion (11) est incliné vers le bas dans la direction de ladite ouverture de décharge (12).

3. Appareil (1 ; 101) selon la revendication 1 ou 2, dans lequel à une extrémité (14) du four de fusion (2 ; 102), opposée à la zone de chargement (4), est agencé au moins un brûleur (15) qui reçoit un combustible à travers un premier conduit d'alimentation (16) et de l'oxygène, ou un mélange d'air et d'oxygène, en tant que comburant, à travers un deuxième conduit d'alimentation (17).

4. Appareil (1 ; 101) selon la revendication 2 ou 3, dans lequel un brûleur supplémentaire (18) est agencé au-dessous du bassin de fusion (11), à l'extérieur du four (2 ; 102), et est orienté de façon à fournir de la chaleur à l'ouverture de décharge (12).

5. Appareil (201), selon la revendication 2, dans lequel ladite ouverture de décharge (212) est placée à une extrémité (214) du four (202), opposée à la zone de chargement (4).

6. Appareil (201) selon la revendication 2 ou 5, dans lequel sur une partie supérieure du bassin de fusion (11), opposée au fond (29), est agencé au moins un brûleur (215) qui reçoit un combustible à travers un premier conduit d'alimentation (216) et de l'oxygène, ou un mélange d'air et d'oxygène, en tant que comburant, à travers un deuxième conduit d'alimentation (217) et/ou dans lequel un brûleur supplémentaire (218) est agencé à l'opposé de l'ouverture de décharge (212), à l'extérieur du four (202) ; et est orienté de façon à fournir de la chaleur à l'ouverture de décharge (212).

7. Appareil (1; 201) selon l'une des revendications précédentes, dans lequel la zone de préchauffage (9) et la zone de fusion (10) du four de fusion (2 ; 202) sont agencées alignées l'une sur l'autre avec un axe sensiblement horizontal.

8. Appareil (1) selon l'une des revendications précédentes, dans lequel ladite extrémité (14 ; 214) est en outre dotée d'un conduit de décharge (19 ; 219) pour décharger les vapeurs produites pendant le chauffage et la fusion desdits déchets, dans lequel ledit conduit de décharge (19 ; 219) communique avec un dispositif postcombustion dans lequel se produit la combustion d'oxyde de carbone et de composés organiques volatils présents dans lesdites vapeurs.

9. Appareil (101) selon l'une des revendications 1 à 4, dans lequel le four de fusion (102) comprend une première partie (111) avec un axe sensiblement horizontal dans laquelle est comprise une première partie de la zone de préchauffage (109), dans lequel la première partie (111) est suivie d'une deuxième partie (112) avec un axe sensiblement vertical dans laquelle sont comprises une deuxième partie de la zone de préchauffage (109) et la zone de fusion (110) et dans lequel ladite deuxième partie (112) est dotée d'une troisième porte (113) associée à une troisième hotte aspirante (114).

10. Appareil (101) selon la revendication 9, dans lequel est placée, au sommet de la deuxième partie (112), une quatrième hotte aspirante (115) qui aspire de l'intérieur du four (102) les vapeurs produites pendant le chauffage et la fusion desdits déchets et envoie les vapeurs à un dispositif de postcombustion dans lequel a lieu la combustion de l'oxyde de carbone et des composés organiques volatils présents dans lesdites vapeurs.

11. Appareil (1; 101; 201) selon la revendication 9 ou 10, dans lequel chacune desdites première porte (5), deuxième porte (6) et troisième porte (113) comprend un cadre fixe (20), qui entoure une ouverture (21), et un panneau mobile (22) qui peut coulisser sur le cadre fixe (20) entre une position fermée, dans laquelle le panneau mobile (22) ferme l'ouverture (21), et une position ouverte, dans laquelle le panneau mobile (22) laisse l'ouverture (21) libre.

12. Appareil (1; 101; 201) selon la revendication 11, dans lequel le cadre fixe (20) est doté d'une pluralité de buses (23), réparties sur au moins deux côtés du cadre fixe (20) et faisant face à l'ouverture (21), dans lequel les buses (23) reçoivent un flux d'air sous pression pour créer un pare-air sur l'ouverture (21) et/ou dans lequel le panneau mobile (22) est doté d'un circuit de refroidissement (24) dans lequel circule un fluide de refroidissement.

13. Appareil (201) selon l'une des revendications 5 à 7, dans lequel une porte supplémentaire (220) est agencée à l'extrémité (214) du four (202), ladite porte étant mobile entre une première position dans laquelle elle ferme l'ouverture de décharge (212) et une deuxième position dans laquelle l'ouverture de décharge (212) est laissée libre.

14. Appareil (201) selon la revendication 13, dans lequel la porte supplémentaire (220) est dotée d'une première paire d'éléments coulissants (223, 225) qui peuvent coulisser le long d'une première tige de guidage (221) et d'une deuxième paire d'éléments coulissants (224, 226) qui peuvent coulisser le long d'une deuxième tige de guidage (222), parallèle à la première tige de guidage (221), la première tige de guidage (221) et la deuxième tige de guidage (222) étant agencées sur des côtés opposés à la porte supplémentaire (220) et dans lequel ladite porte supplémentaire (220) peut être inclinée par rapport auxdites première tige de guidage (221) et deuxième tige de guidage (222).
